(19) Europäisches Patentamt
European Patent Office
Office européen des brevets

(11) Veröffentlichungsnummer: **0 311 851**
**A2**

(12) **EUROPÄISCHE PATENTANMELDUNG**

(21) Anmeldenummer: **88116167.3**

(22) Anmeldetag: **30.09.88**

(51) Int. Cl.[4]: **A01N 53/00 , //(A01N53/00, 41:06)**

(30) Priorität: **10.10.87 DE 3734341**

(43) Veröffentlichungstag der Anmeldung:
**19.04.89 Patentblatt 89/16**

(84) Benannte Vertragsstaaten:
**BE CH DE ES FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Haas, Johannes, Dipl.-Ing.**
**Im Bend 11**
**D-4048 Grevenbroich(DE)**
Erfinder: **Glenz, Oskar, Dr.**
**Adolf-Kolping-Strasse 2**
**D-5068 Odenthal(DE)**
Erfinder: **Klesper, Herbert**
**Semmelweisstrasse 75**
**D-5000 Köln 80(DE)**

(54) **Mittel gegen Keratinschädlinge und Verfahren zur Behandlung von Wolle.**

(57) Mittel, die eine Kombination ausCyclopropancarbonsäre-phenoxybenzylestern und Chlormethylsulfonamido-diphenylethern enthalten, sind zum Schutz von Wolle, Wolltextilien und wollhaltigen Textilien sowie Federn, Haaren und verwandtem oder daraus gefertigtem Material gegen Befall und Fraßschäden durch keratinverdauende Schädlinge geeignet.

EP 0 311 851 A2

## Mittel gegen Keratinschädlinge und Verfahren zur Behandlung von Wolle

Die Erfindung betrifft Mittel, die eine Kombination aus Cyclopropancarbonsäure-phenoxybenzylestern und Chlormethylsulfonamido-diphenylethern enthalten und zum Schutz von Wolle, Wolltextilien und wollhaltigen Textilien sowie Federn, Haaren und verwandtem oder daraus gefertigtem Material gegen Befall und Fraßschäden durch keratinverdauende Schädlinge geeignet sind. Die Erfindung betrifft weiter Verfahren zur Behandlung solcher Artikel mit diesen Mitteln.

Es ist bekannt, daß Cyclopropancarbonsäure-phenoxybenzylester, z.B. 3-(2,2-Dichlorovinyl)-2,2-dimethylcyclopropancarbonsäure-(3-phenoxybenzyl)-ester (GB-A-1 413 491) und fluorsubstituierte Cyclopropancarbonsäure-phenoxybenzylester, z.B. 3-(2,2-Dichlorovinyl)-2,2-dimethyl-cyclopropancarbonsäure-(4-fluoro-3-phenoxybenzyl)-ester (DE-A-2 709 264) starke insektizide Eigenschaften aufweisen.

Es ist auch bekannt, daß bestimmte Cyclopropancarbonsäure-phenoxybenzylester, in erster Linie 3-(2,2-Dichlorovinyl)-2,2-dimethyl-cyclopropancarbonsäure-(3-phenoxybenzyl)-ester (vgl. Pestic., Sci., 1977, 8, 279-283), und fluorsubstituierte Cyclopropancarbonsäure-phenoxybenzylester, in erster Linie 3-(2,2-Dichlorovinyl)-2,2-dimethyl-cyclopropancarbonsäure-(4-fluoro-3-phenoxy-α-cyano-benzyl)-ester (vgl. DE-A-2 852 028) zur Bekämpfung von Textilschädlingen, auch im Wege der präventiven Behandlung der Textilien durch Ausrüstung, verwendet werden können.

Ferner ist bekannt, daß Chloraminodiphenylether, z.B. 4,5,2′,4′,4′-Pentachlor-2-chlormethylsulfonamidodiphenylether, auf Textilien appliziert eine fraßhemmende Wirkung gegenüber keratinverdauenden Schädlingen haben.

Es wurde nun gefunden, daß Mischungen aus Cyclopropancarbonsäure-phenoxybenzylestern, insbesondere solchen in Formel

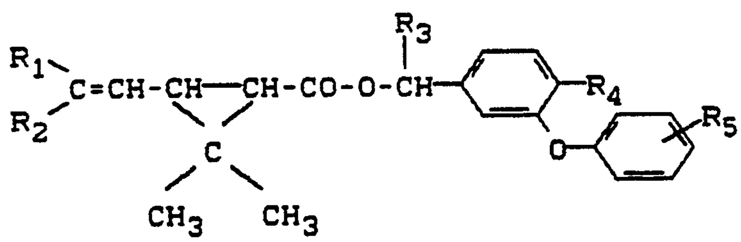

(I)

in welcher

$R_1$ für Wasserstoff, Alkyl oder Halogen,

$R_2$ für Alkyl, Halogen, gegebenenfalls durch Halogen substituiertes Phenyl,

$R_3$ für Wasserstoff, Cyano oder Ethinyl,

$R_4$ für Wasserstoff oder Halogen und

$R_5$ für Wasserstoff oder Halogen stehen,

und Chlormethylsulfonamido-diphenylethern, insbesondere solchen der Formel

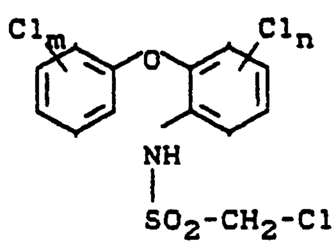

(II)

in welcher

die Summe von m und n bei 4 bis 7 liegt,

sehr gut zur Behandlung von Wolle, Wolltextilien und wollhaltigen Textilien sowie Federn und Haaren oder daraus gefertigten Materialien als Fraßschutz gegen Keratinschädlinge geeignet sind.

Das Gewichtsverhältnis von Wirkstoff (I) zu Wirkstoff (II) liegt in den erfindungsgemäßen Mischungen,

vorzugsweise bei 1:1-4, insbesondere bei 1:2.

In Formel (I) haben die Alkylreste vorzugsweise 1 bis 4 Kohlenstoffatome. Halogen steht im Fall von $R_1$ und $R_2$ bevorzugt für Chlor oder Brom und im Fall von $R_4$ und $R_5$ bevorzugt für Fluor oder Chlor.

Von besonderem Interesse sind Verbindungen der Formel (I), in der

$R_1$ und $R_2$ gleich sind und für Methyl, Chlor oder Brom stehen,
$R_3$ für Wasserstoff, Cyano oder Ethinyl,
$R_4$ für Wasserstoff oder Fluor und
$R_5$ für Wasserstoff, Chlor oder Fluor stehen.

In bevorzugten Verbindungen (II) stehen
m für 2, 4 oder 5 und
n für 4 oder 5
und die Summe von m und n liegt bei 4 bis 7.

Von den bevorzugten Verbindungen (II) ist von besonderem Interesse die Verbindung (III), die aus einer Mischung aus

5 Gew.-% mit m + n = 4,
20 Gew.-% mit m + n = 5,
60 Gew.-% mit m + n = 6 und
15 Gew.-% mit m + n = 7 besteht.

Überraschenderweise zeigen die erfindungsgemäßen Mischungen im Vergleich zu den Einzelkomponenten (I) und (II) einen synergistischen Effekt bei der Bekämpfung von Keratinschädlingen.

Zu den Keratinschädlingen gehören aus der Ordnung der Tineidae (echte Motten) z.B.
Tineola bisseliella (Kleidermotte),
Tinea pellionella (Pelzmotte),
Hofmannophila pseudospretella (Samenmotte)

und aus de Reihe der Käfer die Larven zweier Gattungen der Dermestidae (Speckkäfer), z.B.
Anthrenus verbasci (Wollkraut-Blütenkäfer),
Anthrenus schrophulariae (Gemeiner Teppichkäfer),
Anthrenus fasciatus (Bebänderter Teppichkäfer),
Attagenus pellio (Gefleckter Pelzkäfer) und
Attagenus piceus (Dunkler Pelzkäfer).

Die Anwendung kann in praktisch allen Verarbeitungszuständen und allen in der Textilindustrie üblichen Naßapplikations- und Sprühprozessen gegebenenfalls gemeinsam mit anderen Veredlungsprozessen an Wolle, Wolltextilien von wollhaltigen Textilien sowie Federn, Haaren und verwandtem Material erfolgen.

Dabei werden die erfindungsgemäßen Mischungen vorzugsweise zusammen mit einem Dispergier- und/oder Lösungsmittel eingesetzt.

## Beispiel 1

Wolle, Wollgarn oder ein Flächengebilde aus Wolle wird bei 40 °C im Flottenverhältnis 1:10 in ein Behandlungsbad gebracht, das pro Liter Wasser

2 g Acid Yellow 151 (= C.I. 13 906)
3 g Essigsäure (60 %ig),
5 g Natriumsulfat kalz.,
1,5 g eines Additionsproduktes aus Stearyl-methylethanolamin und 40 EO,
sowie eine Mischung aus
0,012 g der Verbindung (I) mit
$R_1$, $R_2$ = Cl,
$R_3$ = CN,
$R_4$ = F und
$R_5$ = H,
0,023 g der Verbindung (III) und
0,035 g eines Kondensationsproduktes aus 1 Mol Phenol mit 2,7 Mol Vinyltoluol umgesetzt mit 16 Mol EO (im folgenden mit A bezeichnet) und
0,163 g Diethylenglykolmonoethylether (im folgenden mit B bezeichnet),

enthält.

Anschließend wird auf Kochtemperatur erhitzt und die Färbung auf übliche Weise fertiggestellt. Das gelbgefärbte Wollmaterial besitzt einen guten Schutz gegen Motten- und Käferfraß.

Beispiel 2

Teppichgarn, das aus einer Wolle/Polyamid-Mischung im Verhältnis 80:20 besteht, wird bei 40 °C im Flottenverhältnis 1:25 in ein Behandlungsbad gebracht, das pro Liter Wasser

1,5 g Acid Yellow 151 (= C.I. 13 906),
0,4 g Essigsäure (60 %ig),
1,2 g Ammoniumsulfat,
0,6 g eines Kondensationsproduktes aus Phenolsulfonsäure, Dihydroxydiphenylsulfon und Formaldehyd,
0,8 g eines Additionsproduktes aus Stearyl-methylethanolamin und 40 EO,
sowie eine Mischung aus
0,007 g der Verbindung (I) mit
$R_1$, $R_2$ = Cl und
$R_3$, $R_4$, $R_5$ = H,
0,013 g der Verbindung (III) und
0,02 g A und
0.09 g B

enthält.

Anschließend wird auf Kochtemperatur erhitzt und die Färbung auf übliche Weise fertiggestellt. Der gelbgefärbte Wollanteil des Teppichgarnes besitzt einen guten Schutz gegen Motten- und Käferfraß.

Beispiel 3

Gute Ergebnise werden auch erhalten, wenn ein Behandlungsbad verwendet wird, daß pro Liter Wasser

0,6 g Acid Yellow 49 (=C.I. 18 640),
0,4 g Essigsäure (60 %ig),
1,2 g Ammoniumsulfat,
1,2 g ®EDOLAN PAW fl.
0,4 g ®AVOLAN S,
und die Komponenten A, B, (I und (III in den in Beispiel 2 genannten Mengen enthält,

und unter den Bedingungen des Beispiels 2 gearbeitet wird.

Beispiel 4

500 kg Teppichgarn, bestehend aus Wolle oder Wollmischung, vorzugsweise mit Polyamid im Verhältnis 80:20, werden nach dem Kontinue-Waschprozeß pro Stunde auf einer Industrie-üblichen Waschanlage gewaschen und ausgerüstet.

Dazu wird im letzten Bottich der Waschanlage die Flotte mit verdünnten Essigsäure auf einen pH-Wert unterhalb 7 eingestellt und pro Liter mit einer Mischung aus

0,014 g der Verbindung (I) des Beispiels 2,
0,026 g der Verbindung (III),
0,04 g A und
0,19 g B
versetzt.

Die Behandlung erfolgt bei 50 °C.

Zur Aufrechterhaltung der Wirkstoffkonzentration im Behandlungsbad erfolgt ein Nachsatz der Mischung aus

87,5 g der Verbindung (I) des Beispiels 2,
162,5 g der Verbindung (III),
250 g A und
1165 g B.

Dieser Nachsatz wird als wäßrige Dispersion während der gesamten Behandlungszeit dem Bad kontinuierlich zugegeben. Das so behandelte Teppichgarn besitzt einen guten Schutz gegen Motten- und Käferfraß. Dies gilt auch für den daraus gefertigten Endartikel.

Beispiel 5

1.000 kg Rohwolle werden nach dem Kontinue-Waschprozeß pro Stunde in einem Leviathan oder einer vergleichbaren Anlage (z.B. Mini-Bowl) gewaschen und ausgerüstet.

Dazu wird im letzten Bottich des Leviathans die Flotte mit verdünnter Essigsäure auf einen pH-Wert unterhalb 7 eingestellt und pro Liter mit einer Mischung aus

0,012 g der Verbindung (I) des Beispiels 2,
0,023 g der Verbindung (III),
0,035 g A und
0,163 g B

versetzt.

Die Behandlung erfolgt bei 70 °C.

Zur Aufrechterhaltung der Wirkstoffkonzentration im Behandlungsbad erfolgt ein Nachsatz von
140 g der Verbindung (I) des Beispiels 2,
260 g der Verbindung (III),
400 g A und
1864 g B.

Dieser Nachsatz wird als wäßrige Dispersion während der gesamten Behandlungszeit dem Bad kontinuierlich zugegeben. Die so behandelte Rohwolle besitzt einen guten Schutz gegen Motten- und Käferfraß. Die Wolle kann allen in der Textilindustrie üblichen Weiterverarbeitungsprozessen zugeführt werden.

Beispiel 6

5,000 kg Rohwolle werden in der Spinnerei-Vorbereitung beim Mischen im Sprühverfahren ausgerüstet. Der Sprühauftrag ist dabei integrierter Bestandteil der Spinnschmälze gemäß dem folgenden Richtrezept.

Gesamtauftrag 675 l
darin enthalten 100 l einer Spinnschmälze (®SELBANA 4243),
20 l eines Haftmittels (®SILKOL HV 86 E) und eine Mischung aus
1.000 g der Komponenten (I) und (III) des Beispiels 2 im dort genannten Gewichtsverhältnis,
1.000 g A und
4.660 g B.

Die so behandelte Rohwolle besitzt einen guten Schutz gegen Motten- und Käferfraß. Die Wolle kann allen in der Textilindustrie üblichen Weiterverarbeitungsprozessen zugeführt werden.

Beispiel 7

Wolle, Wollgarn oder Flächengebilde aus Wolle wird bei 20 bis 40 °C im Flottenverhältnis 1:10 in ein Behandlungsbad gebracht, das pro Liter Wasser

3 g Essigsäure (60 %ig),
1 g eines Ammoniumsalzes eines $C_{12}$-$C_{14}$-Alkylsulfonatgemisches und eine Mischung aus

0,008 g der Verbindung (I) mit
$R_1$, $R_2$ = $CH_3$,
$R_3$ = CN und
$R_4$, $R_5$ = H und
0,022 g der Verbindung (III),
0,03 g A und
0,14 g B

enthält.

Anschließend wird auf 60° C erhitzt und das Behandlungsbad bei dieser Temperatur belassen.

Das so ausgerüstete Wollmaterial besitzt einen guten Schutz gegen Motten- und Käferfraß.

## Beispiel 8

Eine Teppichware, welche im Pol 2.000 g/m² hat und deren Grundgewebe aus Polypropylen oder Jute besteht, wird mit einer Lösung besprüht, die pro Liter Wasser bei einem Sprühauftrag von 20 % vom Warengewicht

1 g eines Ammoniumsalzes eines $C_{12}$-$C_{14}$-Alkylsulfonatgemisches und eine Mischung aus
0,56 g der Verbindung (I) mit
$R_1$, $R_2$ = Cl,
$R_3$, $R_5$ = H und
$R_4$ = F,
1,94 g der Verbindung (III),
2,5 g A und
11,7 g B

enthält.

Der Sprühauftrag erfolgt über die gesamte Breite der Ware gleichmäßig, wobei sich die Sprühkegel leicht überlappen sollen. Anschließend wird die Ware in den Trockner geführt.

Die so behandelte Teppichware besitzt einen guten Schutz gegen Motten- und Käferfraß im gesamten Polmaterial, sowohl auf der Poloberfläche wie in der Tiefe des Pols.

## Beispiel 9

Eine Teppichware, welche im Pol 2.000 g/m² hat und deren Grundgewebe aus Polypropylen oder Jute besteht, wird im Schaumauftragsverfahren ausgerüstet. Der Schaumauftrag kann dabei nach folgendem System erfolgen:

| | |
|---|---|
| Geschwindigkeit | 4 m/Min. |
| Naßauftrag | 30 % |
| Verschäumung | 1:50 |
| Kissendruck | 0,4 bar |

Die zu verschäumende Flotte enthält pro Liter Wasser

5 g Dodecyloxyethyl-dihydroxyethyl-aminoxid, sowie eine Mischung aus
0, 4 g der Verbindung (I) von Beispiel 2,
0,8 g der Verbindung (III),
1,2 g A und
5,6 g B.

Die Penetration des Pols bis in die Tiefe ist gut, ohne daß die Feuchtigkeit in das Grundgewebe durchschlägt. Die so behandelte Teppichware besitzt einen guten Schutz gegen Motten- und Käferfraß sowohl auf der Poloberfläche wie auch in der Tiefe des Pols.

Beispiel 10

Eine Wollstückware von 500 g/m² Gewicht wird auf einem Foulard so behandelt, daß eine Flottenaufnahme von 100 %, bezogen auf das Warengewicht, resultiert.

Die Flotte enthält pro Liter Wasser

2 g eines Ammoniumsalzes eines $C_{12}$-$C_{14}$-Alkylsulfonatgemisches sowie eine Mischung aus
0,06 g der Verbindung (I) mit
$R_1$ = Cl,
$R_2$ = $CH_3$,
$R_3$, $R_4$, $R_5$ = H,
0,24 g der Verbindung (III),
0,3 g A und
1,4 g B.

Aus dem Foulard wird die Ware in den Trockner bzw. Spannrahmen geführt.

Die so behandelte Stückware besitzt einen guten Schutz gegen Motten- und Käferfraß.

Beispiel 11

In einer diskontinuierlich arbeitenden Maschine, deren Behandlungsmedium Tetrachloroethylen ist, werden bis zu 50 Chargen Teppichgarn von je 8 kg Gewicht behandelt. Die Behandlungsflotte enthält pro Liter Lösungsmittel

1 g der Verbindung (I) mit
$R_1$, $R_2$ = Br,
$R_3$ = CN und
$R_4$ , $R_5$ = H,
1 g der Verbindung (III) und 9 g B

als Stammansatz.

Zur Aufrechterhaltung der Konzentration werden der Behandlungsflotte nach jeder 5. Charge

3,5 g der Verbindung (I),
3,5 g der Verbindung (III) und
33,0 g B

zugegeben.

Nach jeder Behandlung wird des Teppichgarn geschleudert und getrocknet, während das Lösungsmittel über Filter in den Vorratstank zwecks weiterer Nutzung zurückgeführt wird.

Das so behandelte Teppichgarn besitzt einen guten Schutz gegen Motten - und Käferfraß.

## Ansprüche

1. Mittel gegen Keratinschädlinge, die eine Mischung von Cyclopropancarbonsäure-phenoxybenzylestern und Chlormethylsulfonamido-diphenylethern enthalten.

2. Mittel nach Anspruch 1, dadurch gekennzeichnet, daß sie als Cyclopropancarbonsäure-phenoxybenzylester Verbindung der Formel

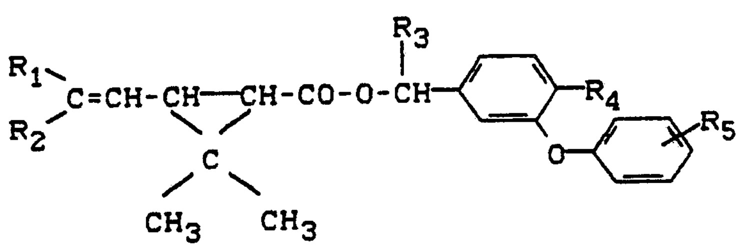

(I)

in welcher
$R_1$ für Wasserstoff, Alkyl oder Halogen,
$R_2$ für Alkyl, Halogen, gegebenenfalls durch Halogen substituiertes Phenyl,
$R_3$ für Wasserstoff, Cyano oder Ethinyl,
$R_4$ für Wasserstoff oder Halogen und
$R_5$ für Wasserstoff oder Halogen stehen,
enthalten.

3. Mittel nach Anspruch 2, dadurch gekennzeichnet, daß sie Verbindungen der Formel (I), in der
$R_1$ und $R_2$ gleich sing und für Methyl, Chlor oder Brom stehen,
$R_3$ für Wasserstoff, Cyano oder Ethinyl,
$R_4$ für Wasserstoff oder Fluor und
$R_5$ für Wasserstoff, Chlor oder Fluor stehen,
enthalten.

4. Mittel nach Anspruch 1, dadurch gekennzeichnet, daß sie als Chlormethylsulfonamido-diphenylether Verbindungen der Formel

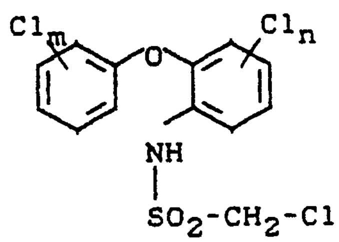

(II)

in welcher
die Summe von m und n 4 bis 7 beträgt,

enthalten.

5. Mittel nach Anspruch 4, dadurch gekennzeichnet, daß sie eine Mischung von Verbindungen der Formel (II) aus

5 Gew.-% mit m + n = 4,
20 Gew.-% mit m + n = 5,
60 Gew.-% mit m + n = 6 und
15 Gew.-% mit m + n = 7

enthalten.

6. Mittel nach Anspruch 1, dadurch gekennzeichnet, daß sie die beiden Wirkstoffe im Gewichtsverhältnis 1:1-4 enthalten.

7. Verfahren zur Behandlung von Wolle, Federn und Haaren, dadurch gekennzeichnet, daß man diese Materialien mit Mischungen des Anspruchs 1 behandelt.

8. Verfahren nach Anspruch 7, dadurch gekennzeichnet, daß man die Behandlung mit wäßrigen Flotten durchführt.

9. Verfahren nach Anspruch 7, dadurch gekennzeichnet, daß man die Behandlung mit Flotten organischer Lösungsmittel durchführt.